# EUROPÄISCHE PATENTANMELDUNG

(11) **EP 2 070 420 A1**
(43) Veröffentlichungstag der Anmeldung: **17.06.2009**
(21) Anmeldenummer: 08021028.9
(22) Anmeldetag: 04.12.2008
(51) Int. Cl.: A21B 3/13

(54) **Emaillierte Springform**

(30) Priorität: 14.12.2007 DE 102007060967
(71) Anmelder: Zenker Backformen GmbH & Co. KG, 91217 Hersbruck (DE)
(72) Erfinder: Riedl, Horst, 86529 Schrobenhausen (DE)
(74) Vertreter: Rau, Albrecht

(57) **Zusammenfassung**

Die Erfindung betrifft eine Springform (1) mit einem Formboden (2) und einem Formrand (3), welcher mit dem Formboden (2) lösbar verbindbar ist, und eine Beschichtung (22) aufweist, wobei die Beschichtung (22) Email aufweist.

## Beschreibung

Die Erfindung betrifft eine emaillierte Springform.

Springformen mit emailliertem Bodenplatten sind seit langem gebräuchlich. Für den Formrand müssen jedoch aufgrund seiner Verformbarkeit bislang alternative Beschichtungen wie Teflon oder unbeschichtete Bleche verwendet werden.

Der Erfindung liegt die Aufgabe zugrunde, eine Springform mit einer Antihaft-Beschichtung mit erhöhter Kratz- und Schnitlfestigkeit zu schaffen.

Diese Aufgabe wird durch die Merkmale des Anspruchs 1 gelöst. Der Kern der Erfindung besteht darin, eine Springform mit einem emaillierten Formrand auszubilden.

Weitere vorteilhafte Ausgestaltungen der Erfindung ergeben sich aus den Unteransprüchen.

Merkmale und Einzelheiten der Erfindung ergeben sich aus der Beschreibung eines Ausfübrungsbeispiels anhand der Zeichnungen. Es zeigen:
- Fig. 1: eine Ansicht einer erfindungsgemäßen Springform und
- Fig. 2: einen Vertikalschnitt durch den Randbereich der Springform gemäß Fig. 1.

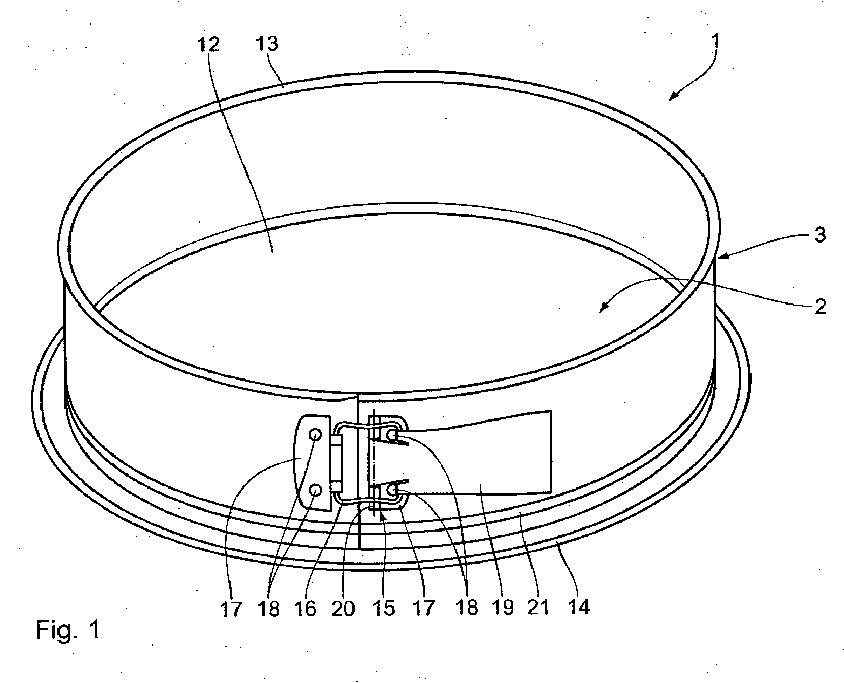

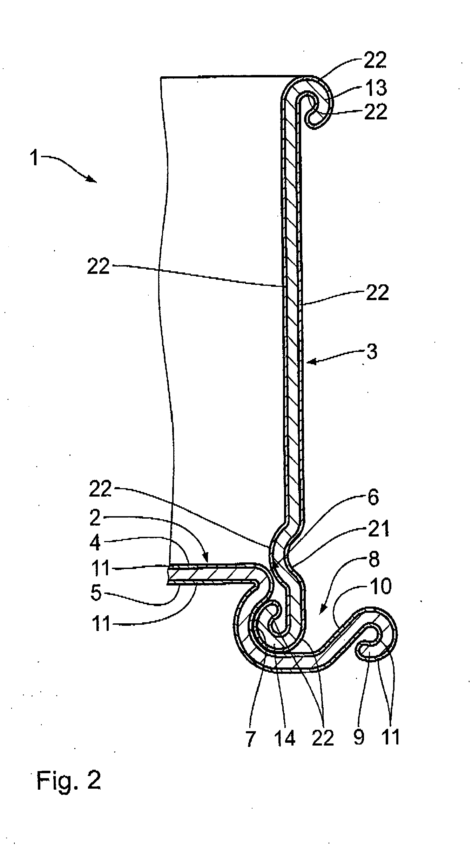

Im Folgenden wird unter Bezugnahme auf die Figuren 1 und 2 ein Ausführungsbeispiel der Erfindung beschrieben. Eine Springform 1 weist einen Formboden 2 und einen Formrand 3 auf. Der Formboden 2 und der Formrand 3 begrenzen einen bei der üblichen Verwendung der Springform 1 nach oben offenen Springfonn-Innenraum 12, der beim Gebrauch mit Teig gefüllt wird. Die Springform 1 ist hitzebeständig.

Der Formboden 2 ist oval oder rund, insbesondere kreisförmig ausgebildet. Der Formboden 2 ist insbesondere rotationssymmetrisch ausgebildet. Er besteht aus Metall-Blech mit einer Dicke von beispielsweise mindestens 0,5 mm. Er weist eine Oberseite 4 und eine Unterseite 5 auf. Die Oberseite 4 und die Unterseite 5 sind glatt ausgebildet und verlaufen insbesondere parallel zueinander. Sie können auch in einem Umfangsbereich leicht ansteigend ausgebildet sein. Umfangsseitig ist der Formboden 2 unter Ausbildung einer abgerundeten Formboden-Kante 6 zur Unterseite 5 hin umgebogen. Im Anschluss an die Formboden-Kante 6 weist der Formboden 2 eine umfangsseitig umlaufende sickenförmige Nut 7 auf. Die Nut 7 ist Teil einer Aufnahme-Rille 8 zur Aufnahme des Formrands 3. Die Aufnahme-Rille 8 ist einseitig offen und wird durch den Formboden 2 im Bereich von der Formboden-Kante 6 bis zu einer Formboden-Umbördelung 9 begrenzt. Um ein Einsetzen des Formrands 3 in die Aufnahme-Rille 8 zu erleichtern, weist der Formboden 2 eine umlaufende, schräg nach oben verlaufende Führungs-Fläche 10 auf.

Der Formboden 2 weist auf der Oberseite 4 und Unterseite 5 eine erste Beschichtung 11 auf. Die erste Beschichtung 11 ist aus Email. Unter Email wird üblicherweise ein anorganisches Gemisch, insbesondere mit einem Anteil an Silikaten und Oxiden, verstanden, welches zu einer glasigen Form geschmolzen wird. Im Folgenden werden unter Email auch andere emailaslige Stoffe, insbesondere Emaillacke verstanden. Die erste Beschichtung 11 ist insbesondere kratz- und schnittfest, säurebeständig, hitzebeständig und haftungsvermindernd. Sie erleichtert somit die Reinigung des Formbodens 2 und erhöht dessen Haltbarkeit.

Der Formrand 3 besteht aus Blech, ist in gewissem Umfang verformbar und zylindermantelförmig ausgebildet. Er kann auch leicht trichterförmig oder vorteilhafter Weise konisch ausgebildet sein. Eine leicht konische, d.h. nach oben etwas zulaufende Form erleichtert das Entfernen des Formrandes 3 vom Formboden 2, wenn der Springform-Innenraum 12 beispielsweise durch einen Kuchen zumindest teilweise ausgefüllt ist. Der Formrand 3 weist eine obere, nach außen weisende Umbördelung 13 auf. Er weist außerdem eine untere, nach innen weisende Umbördelung 14 auf. Der Formrand 3 hat einen veränderbaren Durchmesser. Hierzu sind die freien Enden des Blechstreifens, aus dem der Formrand 3 besteht, überlappend angeordnet. Sie sind insbesondere im Bereich der Umbördelungen 13 und 14 ineinanderschiebbar. Der Formrand 3 ist hierdurch öffenbar und schließbar. Zum Öffnen und Schließen des Formrands 3 ist ein Spannverschluss 15 vorgesehen. Der Spannverschluss 15 umfasst einen Spannbügel 16, welcher mittels einer Befestigungsplatte 17 am Formrand 3 befestigt ist. Die Befestigungsplatte 17 ist mittels Nieten 18 im Bereich des einen Endes des den Formrand 3 bildenden Blechstreifens befestigt. Er kann jedoch auch auf andere weise am Formrand 3 befestigt sein. Der Spannbügel 16 ist um eine Achse, welche parallel zum Formrand 3 und im Wesentlichen vertikal verläuft, gegenüber dem Formrand 3 verschwenkbar. Der Spannverschluss 15 umfasst weiterhin einen Spannhebel 19, welcher ebenfalls mittels einer Befestigungsplatte 17 am Formrand 3 befestigt ist. Die Befestigungsplatte 17 ist ebenfalls insbesondere durch Nieten 18 am Formrand 3 befestigt. Der Spannhebel 19 ist um eine parallel zum Formrand 3 ausgerichtete, insbesondere vertikal verlaufende Spannhebel-Achse 20 verschwenkbar. Mittels des Spannverschlusses 15 ist die Springform 1 öffenbar und schließbar. Beim Schließen des Spannverschlusses 15 vergrößert sich der Bereich, im welchen die Enden des Formrandes 3 überlappen.

Der Formrand 3 ist beim Schließen formschlüssig mit dem Formboden 2 verbindbar. Insbesondere ist die untere Umbördelung 14 des Formrandes 3 formschlüssig in der Nut 7 des Formbodens 2 anordenbar.

Der Formrand 3 weist außerdem einen umlaufenden Dichtwulst 21 auf. Im zusammengesetzten Zustand der Sprirtgform 1 wird die untere Umbördelung 14 beim Schließen des Spannverschlusses 15 in die Nut 7 gedrückt. Die untere Umbördelung 14 liegt somit im zusammengesetzten Zustand der Springform 1 bei geschlossenem Spannverschluss 15 über die gesamte Umfangslänge abdichtend an der Nut 7 an. Vorteilhafter Weise wird der Dichtwulst 21 beim Schließen des Spannverschlusses 15 gegen die Formboden-Kante 6 gedrückt. Der Dichtwulst 21 liegt insbesondere im zusammengesetzten Zustand der Springform 1 bei geschlossenem Spannverschluss 15 abdichtend an der Formboden-Kante 6 an. Hierdurch wird ein Auslaufen eines möglicherweise flüssigen Inhalts aus dem Springform-Innenraum 12 vermieden.

Der Formrand 3 weist eine zweite Beschichtung 22 auf. Die Beschichtung 22 ist kratz- und schnittfest, haftungsvermindernd und hitzebeständig. Die Beschichtung 22 ist weiterhin in gewissem Umfang flexibel, um die Elastizität des Formrandes 3 zu erhalten, ohne dass es beim Öffnen des Formrandes 3 zu einem Abplatzen der Beschichtung 22 kommt. Die Beschichtung 22 besteht insbesondere aus Email. Die zweite Beschichtung 22 kann aus dem gleichen Material wie die erste Beschichtung 11 sein. Vorteilhafterweise ist die gesamte Oberfläche des Formrandes 3 vollständig mit der Beschichtung 22 versehen. Die Beschichtung 22 ist insbesondere auch im Bereich der Umbördelungen 13 und 14 vorgesehen, insbesondere auch auf deren Innenseite.

Durch die Beschichtung des Formrandes 3 mit Email können zahlreiche Vorteile erreicht werden. Teig und Backreste haften nicht am Formrand 3 und können leicht entfernt werden. Der Formboden und der Formrand können gleich aussehen und geben somit ein harmonisches, einheitliches optisches Gesamtbild. Anders als bei Teflonbeschichtungen ist eine Emailbeschichtung kratzfest und abgelöste Bestandteile sind nicht gesundheitsschädlich.

## Patentansprüche

1. Springform (1) mit
a. einem Formboden (2), und
b. einem Formrand (3), welcher i. mit dem Formboden (2) lösbar verbindbar ist, und ii. eine Beschichtung (22) aufweist,
c. wobei die Beschichtung (22) Email aufweist.

2. Springform (1) gemäß Anspruch 1, **dadurch gekennzeichnet, dass** die Beschichtung (22) des Formrands (3) biegsam ist.

3. Springform (1) gemäß einem der vorhergehenden Ansprüche, **dadurch gekennzeichnet, dass** der Formboden (2) eine Beschichtung (11) aus Email aufweist.

4. Springform (1) gemäß einem der vorhergehenden Ansprüche, **dadurch gekennzeichnet, dass** der Formrand (3) eine erste Umbördelung (14) aufweist, welche im zusammengesetzten Zustand der Springform (1) in eine umfangsseitig verlaufende Nut (7) am Formboden (2) eingreift.

5. Springform (1) gemäß Anspruch 4, **dadurch gekennzeichnet, dass** die Beschichtung (22) die Umbördelung (14) vollständig umgibt.

6. Springform (1) gemäß einem der vorhergehenden Ansprüche, **dadurch gekennzeichnet, dass** die Beschichtung (22) den Formrand (3) zumindest innenseitig, insbesondere vollständig umgibt.

7. Springform (1) gemäß einem der vorhergehenden Ansprüche, **dadurch gekennzeichnet, dass** der Fomuund (3) einen Dichtwulst (21) aufweist, welcher im zusammengesetzten Zustand der Springform (1) abdichtend an einer umlaufenden Kante (6) des Formbodens (2) anliegt.
